# EUROPEAN PATENT APPLICATION

(11) **EP 0 967 706 A1**
(43) Date of publication of application: **29.12.1999**
(21) Application number: 98401589.1
(22) Date of filing: 26.06.1998
(51) Int. Cl.: H02G 15/18

(54) **Joint between two electrical cables and protection element therefore**

(71) Applicant: ALCATEL, 75008 Paris (FR)
(72) Inventor: de Buyst, Jo, 9300 Aalst (BE)
(74) Representative: Narmon, Gisèle Marie Thérèse

(57) **Abstract**

A joint between two electrical cables (1) having stripped end portions. The joint comprises electrical and mechanical connection means (2) connecting both end portions of the cables, a first electrical insulating sleeve (3) mounted on the connection means and the stripped end portions, a second sealing sleeve (4) surrounding the first sleeve (3) and extending on both sides of the first sleeve (3) on said cables (1), and a supplemental and impact-resistant protection element (5) surrounding at least both end portions of the second sleeve (4). The supplemental, impact-resistant protection element (5) comprises at least two layers (11,12): a hard external layer (11) to avoid initial cutting of the object causing the impact, and another layer (12) that is shock-absorbing at the inner side of the first layer (11). The impact-resistant protection element (5) preferably extends over the complete joint so as to surround both ends of the second sleeve (4). A same protection element may extend over the complete joint and thus surround both ends of the second sleeve together, or separate protection elements may each surround one end of the second sleeve. The impact-resistant protection element (5) may also be a sleeve slipped-on over an end of the second sleeve (4), may be wrapped around this end, may consist of two shells surrounding together this end or may be cold shrinkable and applied by cold shrinking. In another embodiment, the supplemental, impact-resistant protection element (5) is made of hard, tear-resistive material. It can be moulded in a shape permitting slipping over one end of the outer sleeve (4) for the impact protection of the weak zone of the joint. The invention also relates to the impact-resistant protection element from one of the above embodiments.

## Description

The invention relates to a joint between two electrical cables having stripped end portions, said joint comprising electrical and mechanical connection means connecting both end portions, at least a first electrical insulating sleeve mounted on the connection means and said stripped end portions, and a second sealing sleeve surrounding the first sleeve and extending on both sides of said first sleeve on said cables.

A cable joint and especially a buried one, must be impact resistant to warranty full safety.

It can be especially difficult to obtain the required impact resistance when the cold shrinkable technology is applied, whereby the above mentioned coaxially superimposed sleeves are radially elastically expandable.

A joint of this kind is disclosed in EP-B1-0.379.056.

The sleeves in such cold shrinkable or mechanico-retractable joints are made from soft materials to obtain the necessary stretchability. Such soft materials cannot withstand the energy transfer occurring at an impact. The energy of an impact cannot be sufficiently absorbed by the thin outer sleeve.

This is particularly true at both ends of the cable joint where the thin outer sleeve is in expanded state and in direct contact with the hard surface of the jacket of the cable.

This impact problem has already been solved in the middle of the joint. The middle of the joint may comprise different layers such as a rubber housing, a metallic screen and an outer protection, which can provide enough protection to withstand impacts.

However, yet no suitable solution has been found for the ends.

It is known to put a plastic container filled with resin around the outer sleeve, but this solution requires extra work and is time-consuming and expensive and contradictory to the concept of the cold shrinkable technology which permits a quick, easy and flexible joint at low costs.

An object of the invention is to avoid the above-mentioned drawbacks and to provide an easily and quickly obtainable joint of two electrical cables with a good impact resistance at its ends.

According to the invention, this object is achieved due to the fact that the joint comprises at least one supplemental and impact-resistant protection element surrounding at least both end portions of said second sleeve.

In a first embodiment of the invention, the supplemental, impact-resistant protection element comprises at least two layers, the external layer being hard, to avoid initial cutting of the object causing the impact, while at least one other layer at the inner side of the first layer is shock-absorbing.

A same protection element may extend over the complete joint and thus surround both ends of the second sleeve together, or separate protection elements may each surround one end of the second sleeve.

The protection element may be a sleeve slipped-on over an end of the second sleeve, may be wrapped around said end, may consist of two shells surrounding together said end or may be cold shrinkable and applied by cold shrinking.

In another embodiment, the supplemental, impact-resistant protection element is from hard tear resistive material.

It can be moulded in a shape permuting slipping over one end of the outer sleeve for the impact protection of the weak zone of the joint.

The invention is particularly suitable for a joint obtained by means of the cold shrinkable technology, whereby at least the above-mentioned outer sleeve is a mechanico-retractable product.

The invention also relates to the impact-resistant protection element from one of the above embodiments.

The above-mentioned and other objects and features of the invention will become more apparent from the following description of some preferred embodiments of the invention, given by way of example only and referring to the accompanying drawings, wherein:
Figure 1 schematically represents a longitudinal section of a joint according to the invention;
Figure 2 represents a transversal section of the supplemental impact resistant protection element of the joint of figure 1;
Figure 3 schematically represents a longitudinal section similar to the one of figure 1, but with respect to an other embodiment of the invention;
Figures 4 and 5 represent transversal sections of supplemental impact-resistant protection elements but with respect to other embodiments as used in the joint of figures 1 to 3;
Figure 6 schematically represents a part of a longitudinal section similar to the ones of figures 1 and 3, but with respect to still another form of embodiment of the invention; and
Figure 7 represents a longitudinal section of the supplemental impact-resistant protection element only, before the application in the joint of figure 6.

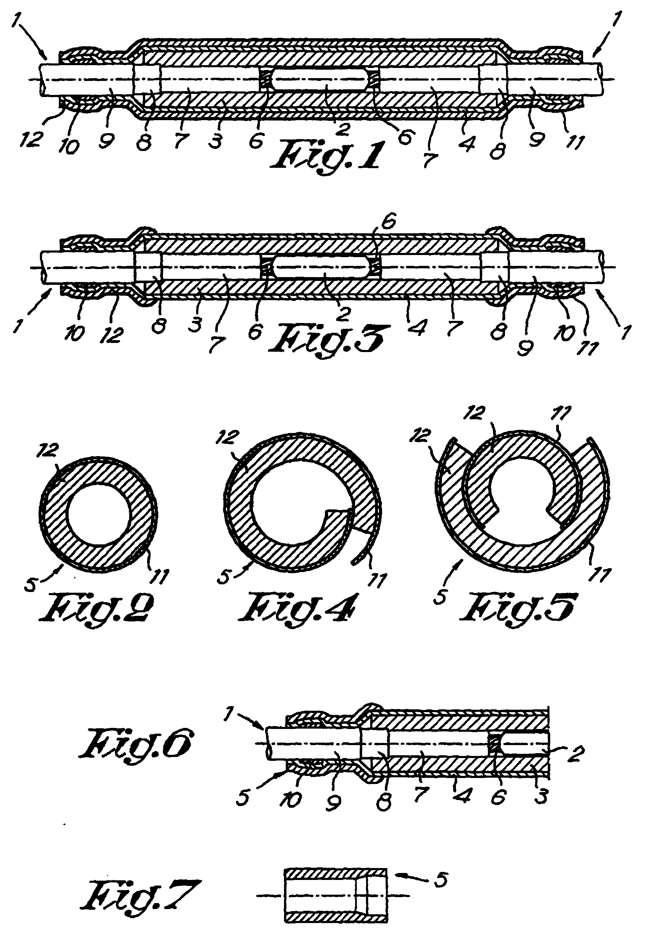

The joint between two electrical cables 1 according to the invention shown in figures 1 and 2 mainly comprises an electrical and mechanical connection means 2, a mechanico-retractable or cold shrinkable protection element constituted by two sleeves 3 and 4 and a supplemental impact-resistant protection element 5.

The connection means 2 is formed by a metallic part which can be bolted or crimped, or by means of a welding, linking both core or conductor end 6 of the electrical cables mechanically and electrically to each other. The core or conductor of this electrical cable is foreseen of a semi-conductive layer (not shown) which is further covered by an electrically insulating layer 7, a semi-conductive layer 8, a metallic screen (not shown) and an outer protection or jacket 9, the metallic screen being for instance returned over the end of the jacket 9.

Other cable constructions are possible and the cores may for example be surrounded by a first semi-conductive layer and a protective outer jacket.

The radially interior sleeve 3 is a field control and electrical insulation tubular element which is cold-shrunk and radially expanded around both stripped cable ends 6. This sleeve 3 may comprise several layers.

The second, radially outer sleeve 4 is radially superimposed to the first sleeve 3 and is a tubular sealing element which is cold shrunk with its ends in radially expanded state around a portion of the semi-conductive layer 8, the metallic screen and the jacket 9 of the cable, so that it fits tightly on the cables 1 to protect against moisture (water) infiltration. Moreover, a mastic filler 10 may be provided between the ends of the external jackets 9 and the ends of the sleeve 4 for water sealing, improving the tightness of the cold shrunk protection element 4.

A metallic screen connection inter-connecting the metallic screens of both cables 1 may be inserted between the sleeves 3 and 4.

Both sleeves 3 and 4 are elastically expandable in radial direction and are made up of relatively soft polymeric material, especially an elastomeric material and for instance on the basis of polymerized Ethylene Propylene Diene Monomer (EPDM).

As known, both sleeves 3 and 4 firstly are fitted in an elastically expanded condition on a rigid tubular support, whereafter the support is positioned over the connection means 2. Finally the supped is removed according to known techniques so that the sleeves 3 and 4 are positioned around the cable ends 6 and the adjacent portions of the jackets 8 and shrink onto these connection means 2 and portions of the jackets 8.

The supplemental impact-resistant protection element 5 surrounds the outer sleeve 4 and protects especially the ends of this sleeve 4 which are in expanded state around the semi-conductive layer 8, the screen connection and the jacket 9.

As shown in figure 2, this protection element 5 consists of an external hard layer 11 and underneath one or more softer shock absorbing layers 12.

The hard layer 11 avoids initial cutting of impacts by e.g. wedge-shaped objects and can be made from thermoplastic material such as PVC or Polyethylene or from hard rubber.

Suitably the absorbing layer 12 is made of a soft plastic foam, an elastomer or another soft polymer and e.g. is made of polyurethane.

If the impact-resistant protection element 5 comprises more than one shock absorbing layer 12, then the layers may be of the same or different materials.

As shown in figure 1, the element 5 has the shape of a sleeve which may be slipped over the sleeve 4 and can for example be pre-installed with the sleeves 3 and 4 on the above mentioned support for positioning.

The impact-resistant protection element 5 may also be cold shrinkable itself.

The form of embodiment shown in figure 3 differs from the above-described form of embodiment only in that the impact-resistant element 5 does not cover the entire mechanico-retractable protection element 3-4, but only the weak spots thereof, this is both ends of the external sleeve 4, at least there where these ends surround the semi-conductive layer 8, the metallic screen and the jacket 9.

In other embodiments, the impact-resistant protection element 5 may be a lengthwise open tubular element with overlapping edges, as shown in figure 4. In this case, the element 5 may be wrapped around the complete sleeve 4 or an end thereof. The hard layer 11 may thereby be softened to be deformable or be applied around the sleeve 4 by elastical deformation.

The overlapping edges may possibly be glued together or fixed to each other otherwise.

Similarly, the impact-resistant protection element 5 may also be constituted by two separate shells, each describing somewhat more than the half of a cylinder and inserted one into the other, e.g.; by deformation, to result in a tubular element as shown in figure 5 surrounding the outer sleeve 4 completely or partly.

In all the above-mentioned embodiments, the impact-resistant protection element 5 assures a reliable protection against impact forces and can be applied in a simple and fast way. If the element 5 is pre-installed with the parts of the mechanico-retractable protection element 3-4, it requires no extra installation time and no extra installation space.

Due to the fact that the impact-resistant protection element 5 contains layer resistant to cutting of impacts (the hard layer 11) and at least one shock absorbing layer (the softer layer 12) and this mechanical properties (resistance to cutting and shock absorbability) are separated, the shape and thickness of the layers may be optimized and the thickness of the soft layer or layers 12 can be seriously reduced.

In the embodiment of the joint shown in figure 6, the supplemental impact-resistant protection element 5 comprises two tubular parts each covering one end of the outer sleeve 4 and consisting of a single layer made from a hard, tear-resistive material.

Each part of the element 5 is moulded in a product that is shown in figure 7 and is slightly radially expandable to be non-size sensitive enough to cover the same cable range as the mechanico-retractable protection element 3-4 and can be slipped over the weak parts of this protection element 3-4, this is on each end the part of the outer sleeve 4 which is in contact with a jacket and a small part of this sleeve 4 where it surrounds the internal sleeve 3.

Although in this embodiment the impact-resistant protection element 5 cannot be pre-installed, it can be quickly put into place and is very economical. It can be used with a standard mechanico-retractable protection element (of Cenelec type I) which becomes a Cenelec type II joint. The joint shows no thermal instability.

The invention is in no way limited by the embodiments which are described heretofore and are shown in the drawings, but such joint between two electrical cables may be made in different variants without departing from the scope of the invention, as defined in the appended claims.

## Claims

1. Joint between two electrical cables (1) having stripped end portions, said joint comprising electrical and mechanical connection means (2) connecting both end portions, at least a first electrical insulating sleeve (3) mounted on the connection means and said stripped end portions, and a second sealing sleeve (4) surrounding the first sleeve (3) and extending on both sides of said first sleeve (3) on said cables (1), characterized in that it comprises at least one supplemental and impact-resistant protection element (5) surrounding at least both end portions of said second sleeve (4).

2. Joint as claimed in claim 1, characterized in that the supplemental, impact-resistant protection element (5) comprises at least two layers (11,12), the external layer (11) being hard, to avoid initial cutting of the object causing the impact, while at least one other layer (12) at the inner side of the first layer (11) is shock-absorbing.

3. Joint as claimed in claim 2, characterized in that a same impact-resistant protection element (5) extends over the complete joint and thus surrounds both ends of the second sleeve (4).

4. Joint as claimed in claim 2, characterized in that separate protection elements (5) each surround one end of the second sleeve (4).

5. Joint as claimed in any one of claims 2 to 4, characterized in that the impact-resistant protection element (5) is a sleeve slipped-on over at least an end of the second sleeve (4), is wrapped around at least an end of said second sleeve (4), consists of two shells surrounding together at least an end of the second sleeve (4) or is cold shrinkable and applied by cold shrinking.

6. Joint as claimed in claim 1, characterized in that the supplemental, impact-resistant protection element (5) is made of hard, tear-resistive material.

7. Joint as claimed in claim 7, characterized in that the supplemental impact-resistant protection element (5) is moulded in a shape permitting slipping over one end of the outer sleeve (4) for the impact protection of the weak zone of the joint.

8. Joint as claimed in any one of the preceding claims, characterized in that at least the above-mentioned second sleeve (4) is a mechanico-retractable product.

9. Impact-resisting protection element (5) for a joint according as claimed in any one of the preceding claims.
